# FASCICULE DE BREVET EUROPEEN

(11) **EP 2 239 689 B1**
(45) Date de publication et mention de la délivrance du brevet: **26.10.2011**
(21) Numéro de dépôt: 09005230.9
(22) Date de dépôt: 09.04.2009
(51) Int. Cl.: G06K 19/073

(54) **Carte du type bancaire avec un interrupteur actionnable par un utilisateur**
Karte vom Typ Bankkarte mit einem durch den Benutzer aktivierbaren Schalter
Card such as a bank card with a switch that can be activated by a user

(43) Date de publication de la demande: 13.10.2010
(73) Titulaire: NagraID Security SA, 2322 Le Crêt-du-Locle (CH)
(72) Inventeur: Droz, François, 2035 Corcelles (CH); Guillaud, Philippe, Los Angeles, CA 90064 (US); Lalo, Cyril, Los Angeles, CA 90065 (US)
(74) Mandataire: Surmely, Gérard

(56) Documents cités:
- US-A- 5 627 355
- US-A1- 2006 266 831

## Description

On connaît des cartes du type bancaire avec un interrupteur pouvant avoir, dans un cas général, une fonction d'activation du circuit de la carte et/ou d'un affichage digital de cette carte ou, dans un cas particulier, une fonction de lancement d'un programme donné implémenté dans la carte, notamment une procédure d'identification sécurisée. On remarquera que dans plusieurs applications, le cas général et le cas particulier peuvent être combinés, l'activation de l'alimentation du circuit électronique incorporé dans une carte engendrant automatiquement le lancement d'un algorithme d'identification sécurisé en vue d'effectuer une certaine transaction, notamment du type bancaire.

On connaît en particulier du document US 5,627,355 une carte comprenant un interrupteur actionnable par une sorte de bouton-poussoir ou une zone déformable de la carte permettant par l'exercice d'une pression dans la zone de la carte contenant l'interrupteur de lancer un algorithme spécifique d'identification sécurisée. Cette carte comprend en outre au moins un affichage digital prévu pour afficher successivement différents nombres d'identification personnels aussi nommés 'codes PIN'. Cette carte comprend également une unité électronique et une source d'alimentation électrique associée à une cellule solaire agencée à la surface de la carte. Ce type de carte peut être utilisé dans divers services, que ce soit pour faire des appels téléphoniques depuis des appareils téléphoniques publics, un service de téléchargement de films sur Internet, accéder à son compte bancaire ou postal notamment en vue d'effectuer diverses transactions, comme le paiement de factures.

Le programme d'identification prévu dans le document US 5,627,355 consiste à mémoriser dans la carte une liste de codes PIN générée de manière unique pour un client donné, cette même liste étant enregistrée dans le serveur de l'établissement bancaire. A chaque activation de la carte via l'interrupteur, un nouveau code personnel est sélectionné dans la liste et affiché. Cette sélection consiste généralement à prendre le code non utilisé suivant dans la liste préétablie. L'utilisateur doit entrer ce code dans l'appareil ou l'ordinateur qui le transmet au serveur. Ce serveur vérifie que ce code est bien le code non utilisé suivant dans la liste du client en question. On parle ici de mot de passe utilisé une seule fois ou à usage unique (OTP, de l'anglais 'One Time Password'). On comprend donc l'importance de maintenir une synchronisation entre la position dans la liste de la carte et la position dans liste du serveur. Si des codes de la liste dans la carte sont utilisés sans être transmis au serveur, notamment lors d'activations involontaires de la carte, le code transmis lors de la prochaine transaction avec le serveur ne correspondra pas au code non utilisé suivant de la liste du serveur. Le document US 5,627,355 mentionne une méthode pour pallier en partie ce problème, par une comparaison avec une séquence de codes dans la liste du serveur de manière à détecter une perte de la synchronisation et ainsi à rétablir la concordance entre les deux listes. Cette méthode notamment pour des raisons de sécurité ne peut être limitée qu'à une courte séquence. Par conséquent, si plusieurs codes sont gaspillés dans la carte, le système n'acceptera plus les codes fournis par le Client. Ensuite, même si la concordance est régulièrement mise à jour, il a une perte de codes utilisables et donc un moindre nombre de transactions possibles pour une liste donnée enregistrée dans la carte. La carte sera ainsi plus rapidement hors service. Finalement, un autre inconvénient lié à ce problème provient du fait que des activations intempestives ont pour conséquence d'augmenter inutilement la consommation d'énergie électrique stockée dans la carte.

En général, une première activation de l'interrupteur d'une carte du type décrit précédemment est prévu pour initialiser l'application. Ensuite, chaque nouveau cycle est lancé par chaque nouvelle activation de l'interrupteur. Le problème lié aux activations involontaires de l'interrupteur et donc du programme d'identification sécurisée ne concerne pas seulement l'utilisateur de la carte qui, par exemple, la place dans un portemonnaie dans une poche arrière de son pantalon et qui, en s'asseyant, peut parfois activer de manière non intentionnelle l'interrupteur de sa carte, mais également des étapes de production au cours desquelles des pressions sont exercées sur celle-ci, notamment lors de l'apport de couches externes par laminage ou des étapes d'impression. Ainsi, lorsque le client reçoit une nouvelle carte, cette dernière peut avoir déjà consommé un certain nombre de codes d'identification personnels. Si ce nombre est plus élevé que celui toléré par le système gérant l'application, le client reçoit alors une carte défectueuse qui ne fonctionne pas. Une telle situation est évidement néfaste pour le fournisseur de service et engendre des inconvénients pour ses clients.

Le but de la présente invention est de fournir une carte électronique avec un interrupteur actionnable par un utilisateur qui résolve le problème susmentionné.

A cet effet, la présente invention concerne une carte électronique comprenant une unité électronique, une source d'énergie électrique, un interrupteur actionnable par un utilisateur de la carte électronique et une application introduite dans ladite unité électronique, caractérisée en ce qu'elle comprend en outre des moyens de détection de l'activation dudit interrupteur qui déterminent si cette activation correspond à une impulsion dont la durée est comprise dans une certaine plage temporelle prédéterminée ou à une succession d'impulsions définissant un signal digital avec un profil temporel dont au moins un paramètre donné a une valeur comprise dans une certaine plage temporelle prédéterminée, ladite application étant activée ou son activation validée lorsque lesdits moyens de détection ont détecté ladite impulsion ou ladite succession d'impulsions.

Selon l'invention, au moins un paramètre temporel déterminé du signal d'activation de l'interrupteur par un utilisateur est contrôlé pour autoriser l'exécution de l'application ou d'un cycle de celle-ci ou pour valider une telle exécution. On notera que cette procédure peut aussi s'appliquer à l'alimentation d'une certaine partie de l'unité électronique et à l'alimentation d'un affichage de manière à limiter au mieux la consommation d'énergie électrique de la carte. On peut donc prévoir que seul un circuit de veille soit en permanence alimenté, ce circuit étant agencé pour détecter au moins un premier signal d'activation provenant de l'interrupteur. On peut aussi prévoir que la première activation de l'interrupteur, après que la carte soit entrée dans un mode inactif, active l'alimentation d'une partie ou de la totalité de l'unité électronique qui, dès qu'elle est alimentée, détecte et traite le signal d'activation provenant de l'interrupteur pour déterminer s'il correspond à un signal d'activation de ladite application.

Grâce aux caractéristiques de l'invention, on peut ainsi éviter qu'une pression prolongée sur l'interrupteur, notamment lors d'un laminage pendant la fabrication, engendre une activation de l'application en question. Dans le cas d'une succession d'impulsions, on a un interrupteur intelligent qui écartera toute activation de l'interrupteur, courte ou longue, dès que le profil temporel du signal digital généré ne correspond pas à un profil ayant au moins un paramètre dont la valeur est comprise dans une plage temporelle donnée. En choisissant ce paramètre de manière à écarter au moins la plupart des signaux d'activation non intentionnelle possibles liés à des actions ou comportements typiques d'un utilisateur classique, on assure que l'application soit lancée essentiellement que par une activation volontaire de l'utilisateur.

Des modes de réalisation de l'invention seront décrits ci-après à l'aide des dessins, donnés à titre d'exemples nullement limitatifs, qui sont annexés à la présente description et dans lesquels:
- La figure 1 montre schématiquement l'architecture d'une carte électronique selon l'invention ;
- La figure 2 montre le profil temporel d'un signal d'activation d'une application intégrée dans la carte électronique selon une première variante envisagée ; et
- La figure 3 montre le profil temporel d'un signal d'activation d'une application intégrée dans la carte électronique selon une deuxième variante envisagée.

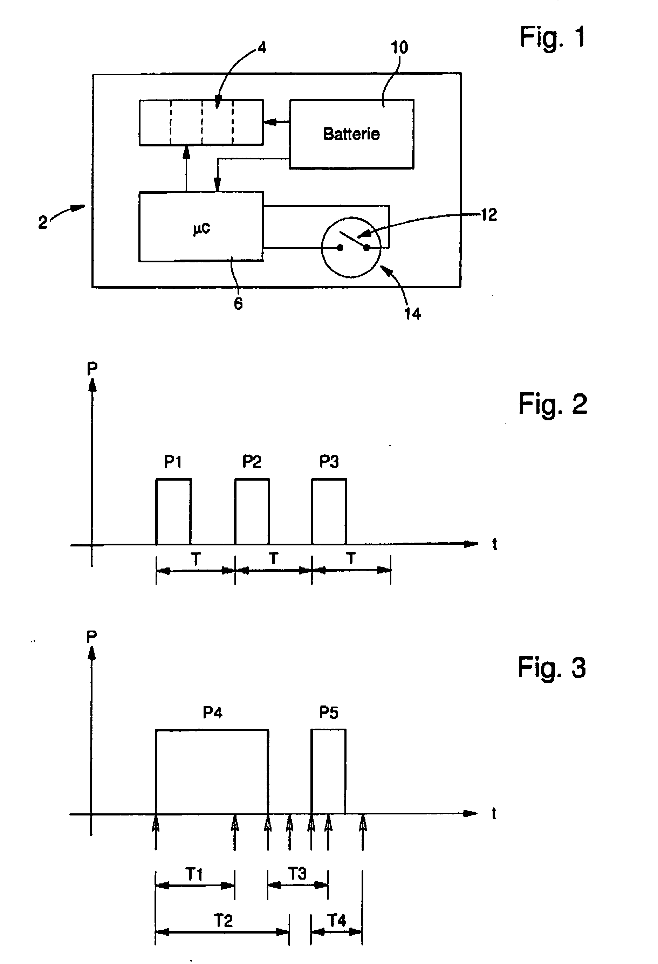

La figure 1 montre une carte électronique 2 comprenant un affichage digital 4, une unité électronique 6, une batterie 10 et un interrupteur 12 actionnable par un utilisateur de la carte électronique. L'interrupteur est intégré dans la carte et associé à une sorte de bouton-poussoir 14 ou à une zone élastiquement déformable de la carte permettant par l'exercice d'une pression dans cette zone déformable ou sur le bouton-poussoir d'activer l'interrupteur. L'activation de l'interrupteur est détectée par des moyens de détection de cette activation associés à des moyens de commande d'une application introduite dans l'unité électronique. Ces moyens de détection et ces moyens de commande peuvent être activés eux-mêmes lors de la détection du commencement d'une activation de l'interrupteur, provoquant l'alimentation électrique d'au moins ces moyens de détection. On notera que dans l'exemple de la figure 1, l'unité électronique 6 est formée par un microprocesseur qui définit les moyens de détection et les moyens de commande susmentionnés. D'autres réalisations avec des circuits électroniques dédicacés respectivement à ces moyens de détection et à ces moyens de commande peuvent être prévues dans le cadre de la présente invention.

En particulier, l'application considérée consiste en un programme d'identification sécurisée d'un utilisateur de la carte en association avec un système relié à un serveur d'un fournisseur de service. Le programme génère ou lit dans une mémoire de la carte des codes d'identification personnels à usage unique (OTP).

Les moyens de détection sont agencés pour détecter l'activation dudit interrupteur 12, notamment via sa fermeture, et déterminer si cette activation correspond à une impulsion dont la durée est comprise dans une certaine plage temporelle prédéterminée ou à une succession d'impulsions définissant un signal digital avec un profil temporel dont au moins un paramètre donné a une valeur comprise dans une certaine plage temporelle prédéterminée. Si tel est le cas, l'application est activée ou son activation validée par ses moyens de commande. En particulier, l'application affiche le code d'identification personnel à utiliser pour une prochaine transaction. L'application peut effectuer cet affichage seulement après la détection d'un signal de l'utilisateur via l'interrupteur qui corresponde à un signal valide ou elle peut lancer l'application dès le début de l'activation de l'interrupteur et afficher ensuite ce code pour l'utilisateur, ce code étant validé (c'est-à-dire considéré consommé) seulement si ledit signal valide est finalement détecté. Dans le cas contraire, les moyens d'affichage sont désactivés rapidement et le code affiché est considéré non utilisé (non consommé). Les moyens d'affichage sont de préférence activés simultanément à l'activation de ladite application. Ils restent dans un état actif durant une certaine période permettant à l'utilisateur d'introduire le code affiché dans le système associé à la carte avant d'être à nouveau désactivés.

Selon une première réalisation de l'invention, la succession d'impulsions requise pour activer la carte électronique, en particulier une application implémentée dans celle-ci, consiste en au moins deux impulsions intervenant dans des périodes temporelles successives de durée donnée T. Dans la variante de la figure 2, trois impulsions P1, P2, P3 sont prévues. Dans une autre réalisation, la période détectée peut être l'intervalle de temps entre les trois impulsions, cet intervalle de temps devant être inférieur à une durée donnée.

Selon une autre réalisation de l'invention, il est prévu des impulsions de longueurs variables. Dans la variante représentée à la figure 3, il est prévu une impulsion relativement longue suivie d'une impulsion plus courte. Divers paramètres temporels peuvent être définis pour caractériser la succession d'impulsions engendrant une activation de l'application concernée de la carte électronique. A titre d'exemple, on peut définir quatre paramètres pour définir une certaine succession des deux impulsions. Il est prévu dans cet exemple que la première impulsion P4 ait une durée comprise entre les valeurs T1 et T2. La durée entre les deux impulsions doit être inférieure à T3 et la deuxième impulsion P5 doit avoir une durée inférieure à T4. On peut encore demander que la durée entre les deux impulsions soit supérieure à une certaine autre durée qui tient compte d'une durée minimale possible pour un utilisateur entre deux pressions successives avec relâchement intermédiaire.

Dans le cas d'une seule impulsion, on définira de préférence une durée minimale et une durée maximale pour cette impulsion.

D'autres variantes peuvent être sélectionnées par l'homme du métier dans le cadre de la présente invention.

## Revendications

1. Carte électronique (2) comprenant une unité électronique (6), une source d'énergie électrique (10), un interrupteur (12) actionnable par un utilisateur de la carte électronique et une application introduite dans ladite unité électronique, **caractérisée en ce qu'**elle comprend en outre des moyens de détection de l'activation dudit interrupteur qui déterminent si cette activation correspond à une impulsion dont la durée est comprise dans une certaine plage temporelle prédéterminée (T) ou à une succession d'impulsions (P1, P2, P3; P4, P5) définissant un signal digital avec un profil temporel dont au moins un paramètre donné a une valeur comprise dans une certaine plage temporelle prédéterminée (T2; T3; T4), ladite application étant activée ou son activation validée lorsque lesdits moyens de détection ont détecté ladite impulsion ou ladite succession d'impulsions.

2. Carte électronique selon la revendication 1, **caractérisée en ce que** ledit interrupteur est associé à un bouton-poussoir ou à une zone élastiquement déformable (14) de la carte électronique.

3. Carte électronique selon la revendication 1 ou 2 comprenant en outre un affichage digital (4), **caractérisée en ce que** ladite application est un programme d'identification personnelle utilisant des codes d'identification personnels à usage unique (OTP), lesquels sont affichés par ledit affichage digital.

4. Carte électronique selon l'une des revendications 1 à 3, **caractérisée en ce que** ledit paramètre donné correspond à une durée maximum (T; T2; T4) pour au moins une impulsion de ladite succession d'impulsions.

5. Carte électronique selon l'une des revendications 1 à 3, **caractérisée en ce que** chaque impulsion prévue doit intervenir dans des périodes temporelles successives (T) de longueurs prédéfinies.

6. Carte électronique selon l'une des revendications précédentes, **caractérisée en ce que** l'intervalle temporel entre deux impulsions successives est prévu inférieur à une certaine durée prédéterminée (T3).

7. Carte électronique selon l'une des revendications précédentes, **caractérisée en ce que** l'intervalle temporel entre deux impulsions successives est prévu supérieur à une certaine durée prédéterminée.

8. Carte électronique selon l'une des revendications précédentes, **caractérisée en ce que** ladite succession d'impulsions comprend au moins deux impulsions de longueurs différentes (P4, P5).

## Claims

1. Electronic card (2) including an electronic unit (6), an electric energy source (10), a switch (12) that can be actuated by a user of the electronic card and an application introduced into said electronic unit, **characterized in that** it further includes means for detecting actuation of said switch, which determine whether said actuation corresponds to a pulse whose length is comprised within a certain predetermined time range (T) or to a series of pulses (P1, P2, P3; P4, P5) defining a digital signal with a time profile wherein at least one given parameter has a value comprised within a certain predetermined time range (T2; T3; T4), said application being actuated or the actuation thereof validated when said detection means have detected said pulse or said series of pulses.

2. Electronic card according to claim 1, **characterized in that** said switch is associated with a push-button or with an elastically deformable zone (14) of the electronic card.

3. Electronic card according to claim 1 or 2, further comprising a digital display (4), **characterized in that** said application is a personal identification program using personal one time passwords (OTP), which are displayed by said digital display.

4. Electronic card according to any of claims 1 to 3, **characterized in that** said given parameter corresponds to a maximum time period (T; T2; T3) for at least one pulse of said series of pulses.

5. Electronic card according to any of claims 1 to 3, **characterized in that** each pulse provided must occur within successive time periods (T) of predefined length.

6. Electronic card according to any of the preceding claims, **characterized in that** the time internal between two successive pulses is provided to be less than a certain predetermined time period (T3).

7. Electronic card according to any of the preceding claims, **characterized in that** the time interval between two successive pulses is provided to be greater than a certain predetermined time period.

8. Electronic card according to any of the preceding claims, **characterized in that** said series of pulses includes at least two pulses of different lengths (P4, P5).

## Patentansprüche

1. Elektronische Karte (2) umfassend eine elektronisch Einheit (6), eine Quelle elektrischer Energie (10), eine von einem Anwender der elektronischen Karte betätigbaren Schalter (12) und eine in der elektronischen Einheit implementierte Anwendung, **dadurch gekennzeichnet, dass** sie unter anderem Mittel zur Detektion der Betätigung des Schalters aufweist, welche bestimmen, ob die Betätigung einem Puls entspricht, dessen Dauer in einem bestimmten vorgegebenen Zeitbereich (T) oder einer Abfolge von Pulsen (P1, P2, P3, P4, P5) entspricht, welche ein digitales Signal mit einem zeitlichen Profil definiert, von welchem zumindest ein Parameter auf einem in einem bestimmten vorgegebenen Zeitbereich (T2; T3, T4) liegenden Wert gesetzt ist, wobei die Anwendung aktiviert oder die Aktivierung validiert wird, wenn die Mittel zur Detektion den Impuls oder die Pulsfolge detektiert haben.

2. Elektronische Karte nach Anspruch 1, **dadurch gekennzeichnet, dass** der Schalter mit einem Druckknopf oder mit einer elastisch deformierbaren Zone (14) der elektronischen Karte verbunden ist.

3. Elektronisch Karte nach Anspruch 1 oder 2, welche unter anderem eine digitale Anzeige (4) aufweist, **dadurch gekennzeichnet, dass** die Anwendung ein Programm zur Persönlichkeitsidentifikation ist, die einmal verwendbare persönliche Identifikationscodes (OTP) verwendet, welche mittels der digitalen Anzeige angezeigt werden

4. Elektronische Karte nach einem der Ansprüche 1 bis 3, **dadurch gekennzeichnet, dass** der gesetzte Parameter einer maximalen Dauer (T; T2; T4) über zumindest einen Puls der Pulfolge entspricht.

5. Elektronische Karte nach einem der Ansprüche 1 bis 3, **dadurch gekennzeichnet, dass** jeder vorgesehene Puls in die sukzessiven zeitlichen Perioden (T) vorgegebener Länge eingreifen soll.

6. Elektronische Karte nach einem der vorhergehenden Ansprüche, **dadurch gekennzeichnet, dass** das Zeitintervall zwischen zwei aufeinanderfolgenden Pulsen kleiner als eine bestimmte vorgegebene Zeitdauer (T3) vorgesehen ist.

7. Elektronische Karte nach einem der vorhergehenden Ansprüche, **dadurch gekennzeichnet, dass** das Zeitintervall zwischen zwei aufeinanderfolgenden Pulsen größer als eine bestimmte vorgesehene Zeitdauer vorgesehen ist.

8. Elektronische Karte nach einem der vorhergehenden Ansprüche, **dadurch gekennzeichnet, dass** die Abfolge von Pulsen zumindest zwei Pulse unterschiedlicher Länge (P4, P5) aufweist.
